# EUROPÄISCHE PATENTSCHRIFT

(11) **EP 3 838 397 B1**
(45) Veröffentlichungstag und Bekanntmachung des Hinweises auf die Patenterteilung: **04.09.2024**
(21) Anmeldenummer: 19020710.0
(22) Anmeldetag: 19.12.2019
(51) Int. Cl.: B01J 19/24, B01J 8/06

(54) **REFORMEROFEN UND DESSEN VERWENDUNG ZUR DAMPFREFORMIERUNG**
REFORMER FURNACE AND ITS USE FOR STEAM REFORMING
FOUR REFORMEUR ET SON UTILISATION POUR LE REFORMAGE À LA VAPEUR

(43) Veröffentlichungstag der Anmeldung: 23.06.2021
(73) Patentinhaber: L'AIR LIQUIDE, SOCIETE ANONYME POUR L'ETUDE ET L'EXPLOITATION DES PROCEDES GEORGES CLAUDE, 75007 Paris (FR)
(72) Erfinder: Coscia, Antonio, 65589 Hadamar (DE); Gammel, Ingo, 92245 Kümmersbruck (DE)
(74) Vertreter: Air Liquide

(56) Entgegenhaltungen:
- EP-A1- 2 708 812
- EP-A1- 3 182 003
- EP-A1- 3 279 561
- CN-A- 109 747 517
- DE-A1- 102011 120 938
- US-A- 3 120 431
- US-A1- 2019 321 800

## Beschreibung

### Technisches Gebiet der Erfindung

Die Erfindung betrifft einen Reformerofen zur katalytischen Reformierung eines kohlenstoffhaltigen Einsatzstoffes mit Wasserdampf, wobei der Reformerofen einen durch eine Mehrzahl von Wänden definierten, zur äußeren Umgebung abgegrenzten Strahlungsraum umfasst, und der Strahlungsraum eine als Gerüst ausgeführte Stahlkonstruktion zur Befestigung von zu- und abführenden Rohrleitungen, Brennern und vertikal angeordneten Reformerrohren aufweist.

### Stand der Technik

Reformeröfen zur katalytischen Reformierung von kohlenstoffhaltigen Einsatzstoffen mit Wasserdampf sind in einer Vielzahl von Ausführungsformen bekannt. Ein bekanntes Beispiel für einen Reformerofen zur katalytischen Reformierung von kohlenstoffhaltigen Einsatzstoffen ist der Dampfreformer zur Reformierung von Erdgas und Wasserdampf zur Erzeugung von Synthesegas, einer Mischung aus Kohlenmonoxid und Wasserstoff sowie regelmäßig auch unerwünschten Begleitstoffen wie beispielsweise Kohlendioxid. Solche Reformierungsprozesse verlaufen endotherm und langsam, so dass zur Umsetzung des kohlenstoffhaltigen Einsatzstoffes mit Wasserdampf eine externe Befeuerungsquelle zum Erhitzen der Katalysator befüllten Reformerrohre (auch Reaktionsrohre) des Reformerofens erforderlich ist.

Bei Anlagen im industriellen Großmaßstab hat sich eine Bauform durchgesetzt, bei der ein im wesentlichen kastenförmiger Ofen mit vertikal angeordneten Reformerrohren zum Einsatz kommt. Der Innenraum der Gesamtheit der Reformerrohre bildet den Reaktionsraum des Reformerofens. Dabei sind die Reformerrohre in einer oder mehreren nebeneinanderstehenden Reihen angeordnet.

Jede Reformerrohrreihe wird üblicherweise durch zwei Brennerreihen befeuert, wobei eine Reformerrohrreihe mittig zwischen zwei parallel zu den Reformerrohrreihen verlaufenden Brennerreihen angeordnet ist, um eine gleichmäßige Befeuerung der Reformerrohre zu gewährleisten. Dabei werden wandständige Brennerreihen von nicht wandständigen Brennerreihen unterschieden. Bei den wandständigen Brennerreihen sind die Brenner zwischen einer Wand des Reformerofens und einer Reformerrohrreihe angeordnet. Bei einer nicht wandständigen Brennerreihe sind die Brenner zwischen zwei Reformerrohrreihen angeordnet.

Die Brenner sind innerhalb des sogenannten Befeuerungsraums des Reformerofens angeordnet. Die Eduktgaszuführung und die Produktgasabführung zu und von den Reformerrohren findet zwangsläufig außerhalb des Befeuerungsraums statt, so dass die Wandungen der Reformerrohre die räumliche Trennung zwischen dem Reaktionsraum und dem Befeuerungsraum definieren.

Die Gesamtheit aus Befeuerungsraum und Reformerrohren wird auch als Strahlungszone des Reformerofens bezeichnet.

Die Brenner der Brennerreihen werden über Zuleitungen mit Luft und Brenngas versorgt und sind bei den häufigsten Bauformen entweder in der Decke oder im Boden des Reformerofens angeordnet, wobei die Flammen der Brenner entsprechend senkrecht nach unten zum Reformerofenboden gerichtet sind oder senkrecht nach oben zur Reformerofendecke gerichtet sind. Andere Anordnungen der Brenner, wie beispielsweise an den seitlichen Wänden des Reformerofens zur seitlichen Befeuerung, oder eine terrassenförmige Anordnung zur diagonalen Befeuerung, sind ebenfalls bekannt, kommen jedoch seltener zur Anwendung.

Der Strahlungsraum eines Reformerofens mit einer oder mehreren Reformerrohrreihen und mehreren Brennerreihen ist im Allgemeinen als Stahlkonstruktion ausgeführt, welche als Gerüst für eine feuerfeste Auskleidung des Befeuerungsraums dient. Darüber hinaus werden zu- und abführende Rohrleitungssysteme, die Brenner sowie die Reformerrohre an dieser Stahlkonstruktion befestigt und von dieser gehalten.

Die Decke des Strahlungsraums ist grundsätzlich als freitragende oder abgehängte Stahlkonstruktion ausgeführt, da vertikal angeordnete Stützen (beispielsweise Pfeiler) zur Abtragung von Lasten nicht durch den Befeuerungsraum geführt werden können. Die aus vertikalen Stützen und horizontalen Hauptträgern bestehenden Hauptträgereinheiten der Stahlkonstruktion sind daher so angeordnet, dass die Stützen wandständig und außerhalb des Befeuerungsraumes verlaufen.

Die Seitenlänge des Reformerofens wird durch die Länge der Reformerrohrreihen und der Brennerreihen definiert, das heißt durch die Anzahl der Reformerrohre und Brenner je Reformerrohrreihe oder Brennerreihe. Übersteigt dabei die Seitenlänge des Reformerofens ein gewisses Maß (beispielsweise 6 bis 7 Meter), sind durch statische Limitierungen mehr als zwei an den Stirnseiten des Reformerofens angeordnete Hauptträgereinheiten erforderlich, um die durch die längeren Brennerreihen und Reformerrohreihen verursachten Lasten abzutragen. Entsprechend muss in diesem Fall eine dritte Hauptträgereinheit oder gegebenenfalls weitere Hauptträgereinheiten zwischen den stirnseitig angeordneten Hauptträgereinheiten angeordnet werden. Der Abstand von Hauptträgereinheit zu Hauptträgereinheit ist dabei jeweils im Wesentlichen gleich, und die Brennerreihen und Reformerrohrreihen verlaufen orthogonal zu den horizontal an der Decke des Strahlungsraums verlaufenden Hauptträgern einer Hauptträgereinheit.

Dieser Aufbau der Stahlkonstruktion hat sich bei aus dem Stand der Technik bekannten Reformeröfen durchgesetzt, da es sich dabei um die wirtschaftlichste Art der Ausgestaltung der Stahlkonstruktion handelt.

Die vorgenannten Art und Weise der Anordnung der Hauptträgereinheiten bringt jedoch auch Nachteile mit sich. Durch die zusätzlichen, nicht an den Stirnseiten des Reformerofens angeordneten Hauptträgereinheiten, das heißt durch die Erweiterung der Anzahl der Hauptträgereinheiten bei großen Reformeröfen auf drei oder mehr, verlaufen die horizontal an der Decke verlaufenden Hauptträger der Hauptträgereinheiten nicht wandseitig, sondern mittig durch den Strahlungsraum des Reformerofens. Durch einen mittig verlaufenden Hauptträger ist an dieser Stelle ein größerer Reformerrohrachsabstand erforderlich. Mit anderen Worten, der Abstand von einem Reformerrohr zum benachbarten Reformerrohr einer Reformerrohrreihe muss an jener Stelle vergrößert werden, an welcher der Hauptträger der Hauptträgereinheit entlang der Decke des Strahlungsraums verläuft.

Beispielsweise beträgt der ideale Reformerrohrachsabstand in einem standardmäßigen Reformerofen circa 300 mm von Reformerrohr zu Reformerrohr. Im Bereich eines mittig verlaufenden Hauptträgers muss dieser Reformerrohachsabstand auf mehr als 500 mm vergrößert werden.

Diese konstruktive Einschränkung führt dazu, dass die Reformerrohre im Bereich der Hauptträgerachsen höhere Betriebstemperaturen aufweisen, was im Allgemeinen zu einer verminderten Lebensdauer des Reformerrohres führt und höhere Sicherheitsaufschläge bei der Auslegung des Reformerofens zur Folge hat. Verursacht wird die höhere Temperatur an diesen Reformerrohren dadurch, dass der Sichtfaktor zu den Brennerflammen größer ist als bei den sonstigen Reformerrohren, welche sich innerhalb einer Reformerrohreihe befinden, und bei welchen die Reformerrohachsabstände kleiner sind.

In diesem Fall wird häufig auch von der Bildung von sogenannten Buchten innerhalb des Reformerofens gesprochen. Die Reformerrohrachsabstände sind entsprechend alle gleich (klein) innerhalb einer Bucht, und größer zwischen benachbarten Reformerrohren zweier benachbarter Buchten. Beispiele für Reformeröfen welche solche Buchten aufweisen sind in der EP 3 182 003 A und in der EP 3 279 561 A1 offenbart.

Die US 2019/0321800 A1 offenbart einen kastenförmigen Reformerofen, welcher in mehrere Abschnitte unterteilbar ist. Die oberen Enden der Reformerrohre sind flexibel an einer über dem Reformer befindlichen Stützstruktur montiert, welche Tragarme umfasst. Die Tragarme sind in zwei benachbarten Reihen mit jeweils einem Reaktorrohr verbunden. Jeder der Tragarme wird von einem horizontalen Balken durch eine Federanordnung gestützt.

### Beschreibung der Erfindung

Die Aufgabe der vorliegenden Erfindung besteht darin, die vorgenannten Nachteile des Standes der Technik zumindest teilweise zu überwinden.

Insbesondere besteht eine Aufgabe der vorliegenden Erfindung darin, einen Reformerofen bereitzustellen, in welchem die Abstände zwischen zwei benachbarten Reformerrohren innerhalb einer Reformerrohrreihe über den gesamten Reformerofen gleich sind.

Eine weitere Aufgabe der vorliegenden Erfindung besteht darin, einen Reformerofen bereitzustellen, welcher keine Buchten umfasst.

Eine weitere Aufgabe der vorliegenden Erfindung besteht darin, einen Reformerofen bereitzustellen, in dem die Reformerrohre gleichmäßigere Betriebstemperaturen aufweisen als dies bei bekannten Reformeröfen der Fall ist.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der vorliegenden Erfindung werden zumindest teilweise gelöst durch einen Reformerofen zur katalytischen Reformierung eines kohlenstoffhaltigen Einsatzstoffes mit Wasserdampf, aufweisend einen durch eine Mehrzahl von Wänden definierten, zur äußeren Umgebung abgegrenzten Strahlungsraum, wobei der Strahlungsraum eine als Gerüst ausgeführte Stahlkonstruktion zur Befestigung von zu- und abführenden Rohrleitungen, Brennern und vertikal angeordneten Reformerrohren beinhaltet, wobei die Brenner zum Erzeugen von abwärts oder aufwärts gerichteten Flammen zum Beheizen der Reformerrohre angeordnet sind, und wobei die Brenner und Reformerrohre innerhalb des Strahlungsraums in Reihen als Brennerreihen und Reformerrohrreihen angeordnet sind, wobei die Brennerreihen und Reformerrohrreihen alternierend und parallel zueinander angeordnet sind, und die Stahlkonstruktion eine Mehrzahl von Hauptträgereinheiten aufweist, wobei jede Hauptträgereinheit zwei wandständig angeordnete, vertikal verlaufende Stützen, sowie einen über die Stützen verbundenen und horizontal verlaufenden Hauptträger aufweist, welcher sich über die gesamte Länge des Strahlungsraums erstreckt, und wobei die Hauptträger zur Befestigung der zu- und abführenden Rohrleitungen, Brenner und Reformerrohre konfiguriert sind, und
die Stahlkonstruktion eine Mehrzahl von horizontal verlaufenden Querträgern aufweist, welche die Stützen der Hauptträgereinheiten untereinander verbinden. Erfindungsgemäß ist vorgesehen, dass die Hauptträger der Hauptträgereinheiten zu den Reformerrohrreihen und Brennerreihen parallel verlaufend angeordnet sind und
die Querträger zu den Reformerrohreihen und Brennerreihen zumindest teilweise orthogonal verlaufend angeordnet sind.

Erfindungsgemäß sind die horizontal verlaufenden, insbesondere an der Decke des Strahlungsraumes verlaufenden, Hauptträger der Hauptträgereinheiten parallel verlaufend zu den Reformerrohrreihen und Brennerreihen angeordnet. Dadurch können die Reformerrohre durchgehend über die gesamte Länge des Strahlungsraumes mit gleichem Abstand angeordnet werden, da keine Aufweitung der Reformerrohrachsabstände durch orthogonal zu den Reformerrohreihen verlaufende Hauptträger erforderlich ist.

Die Hauptträger der Hauptträgereinheiten tragen die Hauptlast der zu- und abführenden Rohrleitungen, Brenner und Reformerrohre, welche an den Hauptträgern der Stahlkonstruktion befestigt sind. Vorzugweise sind die vertikal angeordneten Stützen der Hauptträgereinheiten mit den Enden der Hauptträger verbunden.

Die Querträger, welche die vertikal verlaufenden Stützen der Hauptträgereinheiten untereinander verbinden, sind zumindest teilweise orthogonal, aber auch parallel zu den Reformerrohrreihen und Brennerreihen angeordnet. Die Querträger dienen der Stabilisierung der Stahlkonstruktion und dienen nicht dem Tragen der Hauptlast der zu- und abführenden Rohrleitungen, Brennern und Reformerrohren. In einem Beispiel sind die Querträger am Boden des Strahlungsraums angeordnet. Da die Querträger eine wesentlich niedrigere Dicke aufweisen als die Hauptträger der Hauptträgereinheiten, können diese auch in dem Raum zwischen Achse der Brenner und Achse der Reformerrohre angeordnet werden, ohne dass eine Vergrößerung der Beabstandung zwischen den einzelnen Reformerrohren erforderlich ist. Die Querträger können im Prinzip an einer beliebigen Stelle zwischen unterem und oberem Ende einer vertikal verlaufenden Stütze einer Hauptträgereinheit befestigt sein, oder an einem der Enden befestigt sein.

In aus dem Stand der Technik bekannten Reformeröfen verlaufen ausschließlich die Querträger parallel zu den Reformerrohrreihen und Brennern. Da die Querträger nicht dem Tragen der Hauptlast der zu- und abführenden Rohrleitungen, Brennern und Reformerrohren dienen, ergeben sich entsprechende statische Limitierungen, und eine orthogonale Anordnung der horizontal verlaufenden Hauptträger ist dementsprechend erforderlich. Dies führt zu den vorgenannten Nachteilen.

Die zumindest über die vertikal angeordneten Stützen verbundenen horizontalen Hauptträger der Hauptträgereinheiten verlaufen vorzugsweise entlang der Decke des Strahlungsraumes. Dabei erstrecken sich die Hauptträger entlang der gesamten Länge des Strahlungsraumes. "Gesamte Länge" bedeutet dabei, dass die Länge der Hauptträger entsprechend der Anforderung der Größe des Strahlungsraumes ausgelegt wird, so dass eine möglichst gleichmäßige Beheizung der Reformerrohre ermöglicht ist. Die Länge des Strahlungsraumes wird dabei durch den Abstand zwischen den beiden Stirnseiten des Strahlungsraumes, das heißt den Abstand zwischen Vorder- und Rückseite, definiert.

Durch die parallele Anordnung der Hauptträger zu den Brennerreihen und Reformerrohreihen ergeben sich folgende Vorteile:
- Die Lebensdauer der Reformerrohrgesamtheit wird erhöht, da keine Belastungsspitzen an bestimmten Reformerrohren auftreten.
- Die maximale an einem Reformerrohr gemessene Temperatur (Tₘₐₓ), bezogen auf die Gesamtheit der Reformerrohre, ist niedriger. Dadurch kann die Wandstärke der Reformerrohe verringert werden, was zu Materialeinsparungen und dadurch Kosteneinsparungen führt.
- Eine niedrigere Wandstärke führt wiederum zu geringeren thermisch bedingten Betriebsspannungen in den Reformerrohren, was die Lebensdauer der Reformerrohre wiederum verlängert.
- Eine niedrigere Wandstärke führt zusätzlich zu einer verbesserten Wärmekonvektion aus dem Strahlungsraum in das Reformerrohrinnere. Dadurch erhöht sich die Temperatur im Katalysatorbette (Spaltgastemperatur), was dazu führt dass effizientere Anlagen konfiguriert werden können (Erhöhung der Reformereffizienz).

Je nach Größe der Anlage liegt die zu erwartende Absenkung von Tₘₐₓ dabei in einem Bereich von circa 5 bis 10 Kelvin. Aus Erfahrung und langjährigen Untersuchungen ist bekannt, dass 10 Kelvin weniger (in Bezug auf Tₘₐₓ) dabei einer möglichen Reduktion der Wandstärke von 10 Prozenten entsprechen. Soll die Wandstärke beibehalten werden, ist dafür mit einem Zugewinn an theoretischer Lebensdauer von 20.000 bis 40.000 Stunden für ein Reformerrohr zu rechnen.

Die Reformerrohrreihen und Brennerreihen sind alternierend und parallel zueinander angeordnet. Da jede Reformerrohrreihe von zwei Seiten durch zwei Brennerreihen befeuert werden sollte, ist entlang der Seitenlänge des Strahlungsraumes vorzugsweise zunächst eine wandständige Brennerreihe angeordnet. Es folgen alternierend und in Abhängigkeit von der Größe des Reformerofens eine bestimmte Anzahl an nicht wandständigen Reformerrohrreihen und Brennerreihen, wobei die letzte der Brennerreihen, an der gegenüberliegenden Seite zur "ersten" wandständigen Brennerreihe, wiederum eine wandständige Brennerreihe ist. Dadurch ergibt sich vorzugsweise folgende Anordnung: Seitenwand - wandständige Brennerreihe - (Reformerrohrreihe - Brennerreihe)n - Reformerrohreihe-wandständigen Brennerreihe - Seitenwand.Dabei ist n=0 oder eine natüuliche Zahl mit n≥1.

Die Brenner an den Enden einer Brennerreihe und die Reformerrohre an den Enden einer Reformerrohrreihe sind an den Stirnseiten (Vorder- und Rückseite) des Strahlungsraumes angeordnet.

Eine bevorzugte Ausführungsform des erfindungsgemäßen Reformerofens ist dadurch gekennzeichnet, dass die Anzahl der Hauptträgereinheiten eine Funktion der Anzahl der Reformerrohrreihen und/oder eine Funktion der Anzahl der Brennerreihen ist. Die Anzahl der Hauptträgereinheiten steigt vorzugsweise mit der Anzahl der Reformerrohrreihen und Brennerreihen, da es konstruktiv am einfachsten zu realisieren ist, wenn mit steigender Zahl von Brennerreihen und Reformerrohreihen eine entsprechend größere Zahl an Hauptträgern zur Befestigung der Brenner und Reformerrohre bereitgestellt wird.

Eine bevorzugte Ausführungsform des erfindungsgemäßen Reformerofens ist dadurch gekennzeichnet, dass der Strahlungsraum eine Anzahl h Hauptträgereinheiten aufweist, und eine Anzahl r Reformerrohrreihen aufweist, wobei zwischen h und r die Beziehung h = r + 1 gilt. Die Anzahl der Hauptträgereinheiten ergibt sich vorzugsweise aus der Zahl der vorhandenen Reformerrohrreihen, wobei vorzugsweise der Strahlungsraum eine Hauptträgereinheit mehr beinhaltet, als Reformerrohrreihen im Strahlungsraum angeordnet sind.

Eine bevorzugte Ausführungsform des erfindungsgemäßen Reformerofens ist dadurch gekennzeichnet, dass der Strahlungsraum eine Anzahl h Hauptträgereinheiten aufweist, und eine Anzahl b Brennerreihen aufweist, wobei zwischen h und b die Beziehung h = b gilt. Die Anzahl der Hauptträgereinheiten ergibt sich vorzugsweise aus der Zahl der vorhandenen Brennerreihen, wobei vorzugsweise der Strahlungsraum die gleiche Anzahl an Hauptträgereinheiten beinhaltet, wie Brennerreihen im Strahlungsraum angeordnet sind.

Weiter bevorzugt gilt für den Reformerofen h = r + 1 und h = b.

Eine bevorzugte Ausführungsform des erfindungsgemäßen Reformerofens ist dadurch gekennzeichnet, dass die Anzahl der Hauptträgereinheiten keine Funktion der Länge einer Reformerrohreihe ist und/oder die Anzahl der Hauptträgereinheiten keine Funktion der Länge einer Brennerreihe ist. Dadurch, dass die Hauptträger der Hauptträgereinheiten parallel und entlang der Reformerrohreihen und Brennerreihen angeordnet sind, ist die Zahl der Hauptträgereinheiten nicht, wie aus dem Stand der Technik bei orthogonaler Anordnung bekannt, durch die Länge der Brennerreihen und Reformerrohrreihen festgelegt. Vielmehr können die Brennerreihen und Reformerrohrreihen innerhalb des Strahlungsraumem im Prinzip beliebig lange ausgelegt werden, wobei die Zahl der Hauptträgereinheiten alleine durch die Anzahl der Brennerreihen und Reformerrohrreihen determiniert ist.

Eine bevorzugte Ausführungsform des erfindungsgemäßen Reformerofens ist dadurch gekennzeichnet, dass zwischen zwei benachbarten Hauptträgereinheiten
- eine einzelne Brennerreihe angeordnet ist oder
- eine Brennerreihe und eine der Brennerreihe benachbarte Reformerrohrreihe angeordnet ist. Zwischen zwei benachbarten Hauptträgereinheiten befinden sich vorzugsweise, da konstruktiv einfach und daher bevorzugt, entweder eine Brennerreihe oder eine Brennerreihen und eine der Brennerreihe benachbarte Reformerrohrreihe.

Dabei ist die eine einzelne Brennerreihe bevorzugt, da konstruktiv einfach realisierbar, eine wandständige Brennerreihe.

Eine bevorzugte Ausführungsform des erfindungsgemäßen Reformerofens ist dadurch gekennzeichnet, dass zwei der Mehrzahl von Hauptträgereinheiten an zwei gegenüberliegenden Wänden des Strahlungsraums jeweils wandständig angeordnet sind, wobei die Hauptträger der wandständig positionierten Hauptträgereinheiten parallel zur jeweiligen Wand verlaufen. Eine Mehrzahl von Hauptträgereinheiten umfasst wenigstens zwei Hauptträgereinheiten im Falle der kleinsten möglichen Ausführung des Reformerofens, beispielsweise bei der Verwendung von nur einer einzigen Reformerrohrreihe und zwei Brennerreihen, deren Brenner die Reformerrohre der einzigen Reformerrohrreihe von zwei Seiten beheizen. In diesem Fall sind die beiden Hauptträgereinheiten jeweils wandständig angeordnet, wobei die Hauptträger entlang der Seitenwände von einer Stirnseite zur gegenüberliegenden Stirnseite des Strahlungsraums verlaufen. Bei größeren Reformeröfen, welche mehr als nur eine einzige Reformerrohrreihe umfassen, sind üblicherweise weitere Hauptträgereinheiten erforderlich. Diese zusätzlichen Hauptträgereinheiten sind zwischen den wandständig angeordneten Hauptträgereinheiten angeordnet, wobei deren Hauptträger horizontal und beabstandet von den Seitenwänden, sowie entlang der Decke des Strahlungsraumes verlaufen.

Eine bevorzugte Ausführungsform des erfindungsgemäßen Reformerofens ist dadurch gekennzeichnet, dass die wandständig angeordneten Hauptträgereinheiten über mehr als zwei wandständig angeordnete, vertikal verlaufende Stützen verfügen. Die wandständig angeordneten Hauptträgereinheiten können über mehr als zwei vertikal verlaufende Stützen verfügen, beispielsweise über eine dritte Stütze, die mittig zwischen den beiden endständigen Stützen der Hauptträgereinheiten angeordnet sind. Dadurch kann die Tragkraft der wandständig angeordneten Hauptträgereinheiten verstärkt/verbessert werden. Da unmittelbar entlang der Wand des Strahlungsraumes keine Reformerrohrreihe oder Brennerreihe verläuft, stört eine an dieser Stelle angeordnete zusätzliche vertikale Stütze nicht.

Eine bevorzugte Ausführungsform des erfindungsgemäßen Reformerofens ist dadurch gekennzeichnet, dass alle Abstände zwischen zwei benachbarten Reformerrohren innerhalb einer Reformerrohrreihe und/oder alle Abstände zwischen zwei benachbarten Brennern innerhalb einer Brennerreihe innerhalb des gesamten Strahlungsraums des Reformerofens gleich sind. Diese Regelmäßigkeit und Symmetrie in der Anordnung der Brenner und Reformerrohre wird erstmals durch die erfindungsgemäße Anordnung der Hauptträgereinheiten ermöglicht und ist bevorzugt, da dies zu einer Vergleichmäßigung der Beheizung der Reformerrohre führt. Temperaturspitzen in den Wandungen der Reformerrohre und im Innenraum (Katalysatorbett) der Reformerrohre werden dadurch bestmöglich vermieden. Auch führt dies zu einer maximalen Vergleichmäßigung der Flammenmuster der Brenner, indem beispielsweise das nicht gewünschte Krümmen der Flammen in Richtung der Reformerofenmitte so weit wie möglich vermieden wird.

Eine bevorzugte Ausführungsform des erfindungsgemäßen Reformerofens ist dadurch gekennzeichnet, dass alle Abstände zwischen zwei benachbarten Reformerrohren, gemessen durch die zwischen zwei Reformerrohrachsen benachbarter Reformerrohre verlaufende Waagrechte, kleiner oder gleich 500 mm sind, vorzugsweise in einem Bereich von 250 bis 450 mm liegen, weiter bevorzugt in einem Bereich von 280 bis 320 mm liegen.

Eine bevorzugte Ausführungsform des erfindungsgemäßen Reformerofens ist dadurch gekennzeichnet, dass die Temperatur des über die abführenden Rohrleitungen abgezogenen Produktgases im Mittel bis zu 950 °C beträgt, vorzugsweise in einem Bereich von 900 bis 950 °C liegt, weiter bevorzugt in einem Bereich von 925 bis 950 °C liegt.

Eine bevorzugte Ausführungsform des erfindungsgemäßen Reformerofens ist dadurch gekennzeichnet, dass die Stahlkonstruktion als Gerüst für eine feuerfeste Auskleidung des Strahlungsraums dient, wobei der Raum innerhalb der feuerfesten Auskleidung einen Befeuerungsraum zur Befeuerung der Reformerrohre definiert. Die Stahlkonstruktion ist innerhalb des sogenannten Strahlungsraums angeordnet. Die Wände oder Außenwände des Strahlungsraumes grenzen diesen zur umgebenden Umwelt hin ab. Die Stahlkonstruktion wiederum stellt das Gerüst für eine feuerfeste Auskleidung des Reformerofens dar, wobei diese Auskleidung von den Außenwänden aus betrachtet in Richtung des Inneren des Strahlungsraumes angeordnet sind.

Eine bevorzugte Ausführungsform des erfindungsgemäßen Reformerofens ist dadurch gekennzeichnet, dass jede Hauptträgereinheit eine oberhalb der Hauptträgereinheit angeordnete und mit dem Hauptträger kraftschlüssig verbundene Fachwerkkonstruktion aufweist. Vorzugsweise ist die Fachwerkkonstruktion durch Verschraubungen (kraftschlüssig) mit den Hauptträgern verbunden. Über eine solche Fachwerkkonstruktion können zusätzlich Lasten über die Hauptträger der Hauptträgereinheiten abgetragen werden.

Die Aufgaben werden ferner zumindest teilweise gelöst durch die Verwendung eines erfindungsgemäßen Reformerofens nach zumindest einer der vorgenannten Ausführungsformen zur Dampfreformierung eines kohlenstoffhaltigen Einsatzstoffes, insbesondere von Erdgas. Bei dem kohlenstoffhaltigen Einsatzstoff kann es sich um jeden dem Fachmann bekannten kohlenstoffhaltigen Einsatzstoff handeln, welcher der Reformierung mit Dampf zur Erzeugung von Synthesegas zugänglich ist.

### Beispiele

Die Erfindung wird im Folgenden durch ein Ausführungsbeispiel näher erläutert. In der folgenden detaillierten Beschreibung des Ausführungsbeispiels wird auf die beigefügten Zeichnungen verwiesen, die einen Teil davon bilden und in denen illustrativ spezifische Ausführungsformen der Erfindung dargestellt sind. In diesem Zusammenhang wird richtungsspezifische Terminologie wie "oben", "unten", "vorne", "hinten" usw. in Bezug auf die Ausrichtung der beschriebenen Figur(en) verwendet. Da Komponenten von Ausführungsformen in einer Vielzahl von Ausrichtungen positioniert werden können, dient die richtungsspezifische Terminologie zur Veranschaulichung und ist in keiner Weise limitierend. Der Fachmann ist sich darüber im Klaren, dass andere Ausführungsformen verwendet werden können und strukturelle oder logische Änderungen vorgenommen werden können, ohne vom Schutzumfang der Erfindung abzuweichen. Die folgende detaillierte Beschreibung ist daher nicht in einem einschränkenden Sinne zu verstehen, und der Schutzumfang der Ausführungsformen wird durch die beigefügten Ansprüche definiert. Die Zeichnungen sind, soweit nicht anders angegeben, nicht maßstabsgetreu.

Weitere Merkmale, Vorteile und Anwendungsmöglichkeiten der Erfindung ergeben sich aus der nachfolgenden Beschreibung der Ausführungsbeispiele in Zusammenhang mit den Zeichnungen.

Es zeigt
- Figur 1: eine schematische und stark vereinfachte Darstellung eines Reformerofens 100 mit Stahlkonstruktion gemäß Stand der Technik,
- Figur 2: eine schematische und stark vereinfachte Darstellung eines Reformerofens 200 mit erfindungsgemäßer Stahlkonstruktion,
- Figur 3a: eine schematische Darstellung des Wärmestromprofils einer Reformerrohreihe 300a gemäß Stand der Technik bei der Bildung von Buchten und
- Figur 3b: eine schematische Darstellung des Wärmestromprofils einer Reformerrohrreihe 300b gemäß erfindungsgemäßem Reformerofen ohne Buchten.

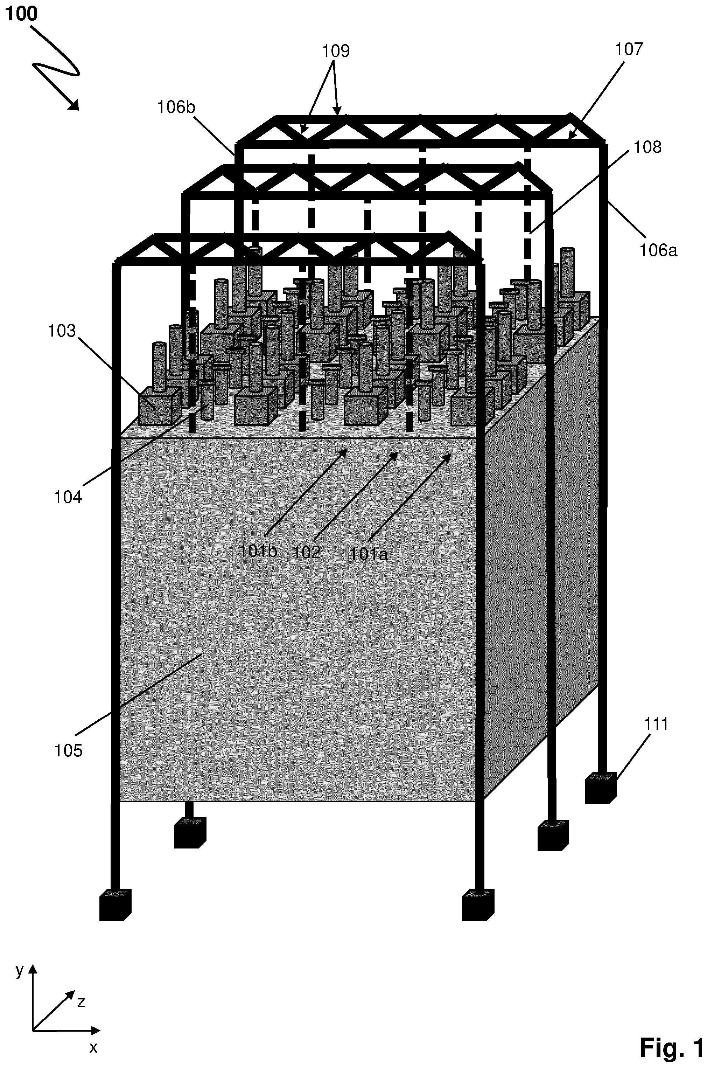

Figur 1 zeigt eine schematische und vereinfachte perspektivische Darstellung eines Reformerofens 100 mit einer Stahlkonstruktion gemäß Stand der Technik. Gezeigt ist im Wesentlichen der Strahlungsraum des Reformerofens 100, welcher die eigentliche Stahlkonstruktion, eine feuerfeste Auskleidung sowie mehrere Reformerrohrreihen und Brennerreihen aufweist. Die Stahlkonstruktion dient der Befestigung der Brenner, Reformerrohre, sowie Zu- und Ableitungen zu/von den Brennern/Reformerrohren. Einzelheiten im Hinblick auf die Befestigungsmittel sind aus Gründen der Übersichtlichkeit nicht gezeigt.

Der gezeigte Reformerofen 100 weist vier Brennerreihen 101a, 101b sowie drei Reformerrohrreihen 102 auf. Jede der Brennerreihen 101a, 101b weist sechs in Reihe angeordnete Brenner 103 auf. Jede der Reformerrohrreihen 102 weist acht in Reihe angeordnete Reformerrohre 104 auf. Bei den am jeweils linken und rechten Rand der Abbildung angeordneten Brennerreihen handelt es sich um die wandständigen Brennerreihen 101a, welche lediglich eine benachbart und parallel angeordnete Reformerrohrreihe 102 befeuern. Die zwischen den wandständigen Brennerreihen 101a angeordneten Brennerreihen sind die nicht wandständigen Brennerreihen 101b, welche jeweils zwei benachbart und parallel angeordnete Reformerrohrreihen 102 befeuern. Die Reformerrohrreihen 102 sowie die Brennerreihen 101a, 101b erstrecken sich jeweils in z-Richtung der Darstellung. Die Brenner 103 erzeugen jeweils nach unten gerichtete Flammen, das heißt die Flamme erstreckt sich im Wesentlichen in y-Richtung der Zeichnung und heizt dadurch die sich ebenfalls in y-Richtung erstreckenden, vertikal angeordneten Reformerrohre 104. Die Brenner 103 ragen in den Befeuerungsraum des Strahlungsraums des Reformerofens hinein, welcher durch die feuerfeste Auskleidung 105 als Abgrenzung nach außen hin definiert wird. Die vertikal verlaufenden Reformerrohre 103 durchstoßen dabei die Decke und den Boden der feuerfesten Auskleidung 105 in einer Weise, dass die Hauptlänge eines Reformerrohres 104 durch die benachbart angeordneten Brenner beheizbar ist. Die Zuleitungen zur Versorgung der Brenner mit Brenngas und Oxidationsmittel sowie der Reformerrohre mit Eduktgas sind aus Gründen der Übersichtlichkeit nicht gezeigt. Gleiches gilt für die Rausgaskanäle und Ableitungen zum Abzug der Brennerabgase sowie der Ableitungen zum Abführen der Produktgase.

Die Stahlkonstruktion des gezeigten Reformerofens weist insgesamt drei Hauptträgereinheiten auf. Jede der Hauptträgereinheiten weist zwei vertikale Stützen 106a und 106b sowie einen horizontalen Hauptträger 107 auf. Die Stützen 106a, 106b weisen jeweils einen Sockel 111 auf. Der horizontal verlaufende Hauptträger 107 verbindet die beiden vertikal verlaufenden Stützen durch eine kraftschlüssige oder stoffschlüssige Verbindung, zum Beispiel durch eine geschraubte Verbindung oder eine Schweißverbindung. Von den insgesamt drei Hauptträgereinheiten sind zwei an den Stirnseiten (Vorder- und Rückseite, jeweils durch xy-Ebene definiert) des Reformerofens angeordnet, und eine der Hauptträgereinheiten ist zwischen diesen stirnseitig angeordneten Hauptträgereinheiten angeordnet. Dabei sind die vertikalen Stützen 106a, 106b der Hauptträgereinheiten in jedem Fall wandständig angeordnet, wobei die zwischen den stirnseitig angeordneten Hauptträgereinheiten angeordnete Hauptträgereinheit Stützen 106a, 106b umfasst, welche entlang der Seitenfläche (definiert durch yz-Ebene) des Reformerofens verlaufen. Die Stützen 106a, 106b der stirnseitig angeordneten Hauptträgereinheiten verlaufen im Bereich der Grenze zwischen den Wänden der Stirnseiten (xy-Ebene) und Wänden der Seitenflächen (yz-Ebene) des Reformerofens 100. Die Wände des Reformerofens umschließen den Strahlungsraum mitsamt der Stahlkonstruktion, der feuerfesten Auskleidung 105 sowie den Brennern 103 und Reformerrohre 104. Die Wände sind aus Gründen der Übersichtlichkeit nicht gezeigt.

Zwischen den Stützen 106a, 106b der Hauptträgereinheiten sind zusätzliche mit den Hauptträgern verbundene, vertikal verlaufende Hilfsstützen 108 angeordnet. Die Hilfsstützen 108 dienen der zusätzlichen Stabilisierung der Stahlkonstruktion. Die Hilfsstützen 108 durchstoßen die Decke der feuerfesten Auskleidung 105 und sind dadurch teilweise innerhalb des Befeuerungsraums des Reformerofens 100 angeordnet. Je Hauptträgereinheit sind im Beispiel des Reformerofens 100 drei Hilfsstützen 108 vorgesehen.

Die Anzahl der Hilfsstützen 108 hängt dabei grundsätzlich von der Breite des Reformerofens, das heißt von der Anzahl der Reformerrohrreihen und Brennerreihen ab. Oberhalb der Hauptträger 107 weist die Stahlkonstruktion zur zusätzlichen statischen Stabilisierung eine kraftschlüssig mit dem Hauptträger 107 verbundene Fachwerkkonstruktion 109 auf, welche diagonal und vertikal angeordnete und untereinander verbunden Streben aufweist.

Die horizontal verlaufenden Hauptträger 107 der Hauptträgereinheiten sind orthogonal zu den Brennerreihen 101a, 101b und den Reformerrohrreihen 102 angeordnet. Mit anderen Worten, die Hauptträger 107 verlaufen in x-Richtung der Darstellung, während die Brennerreihen 101a, 101b und Reformerrohrreihen 102 in z-Richtung der Darstellung verlaufen. Aufgrund der Länge der Reformerrohrreihen 102 (mit jeweils acht Reformerrohren 104) und Brennerreihen 101a, 101b (mit jeweils sechs Brennern 103) sind zwei stirnseitig angeordnete Hauptträger aufgrund statischer Anforderungen nicht ausreichend. Das heißt die dritte, zwischen den stirnseitig angeordneten Hauptträgereinheiten angeordnete Hauptträgereinheit ist erforderlich, um den statischen Anforderungen der gezeigten Reformerrohrreihenlänge und Brennerreihenlänge genüge zu tun. Grundsätzlich steigt die Zahl der Hauptträgereinheiten eines konventionellen Reformerofens mit der Länge einer Reformerrohrreihe 102 und der Länge einer Brennerreihe 101a, 101b.

Die dritte Hautträgereinheit beansprucht, beispielsweise durch die vertikal verlaufenden Hilfsstützen, einen gewissen Raum, wodurch der Abstand zwischen dem dritten und vierten Brenner einer Brennerreihe 101a, 101b im Vergleich zu allen anderen Brennerabständen vergrößert werden muss. Das gleiche gilt für den Abstand zwischen dem vierten und fünften Reformerrohr einer Reformerrohrreihe 102. Diese konstruktive Einschränkung führt dazu, dass die Reformerrohre 104 im Bereich der mittigen Hauptträgereinheit höhere Betriebstemperaturen aufweisen, was zu einer verminderten Lebensdauer führt und/oder einen höheren Sicherheitsaufschlag bei der Auslegung der Reformerrohre zur Folge hat. Verursacht werden die höheren Temperaturen des in diesem Fall vierten und fünften Reformerrohres einer Reformerrohrreihe 102 dadurch, dass der Sichtfaktor dieser Reformerrohre zu den Brennerflammen größer ist als der Sichtfaktor bei den übrigen Rohren.

Die mittig angeordnete Hauptträgereinheit unterteilt den Reformerofen in zwei sogenannte "Buchten", wobei jede Bucht drei Reformerrohrteilreihen mit jeweils vier Reformerrohren und vier Brennerteilreihen mit jeweils drei Brennern aufweist. Eine solche Buchtenbildung ist grundsätzlich unerwünscht.

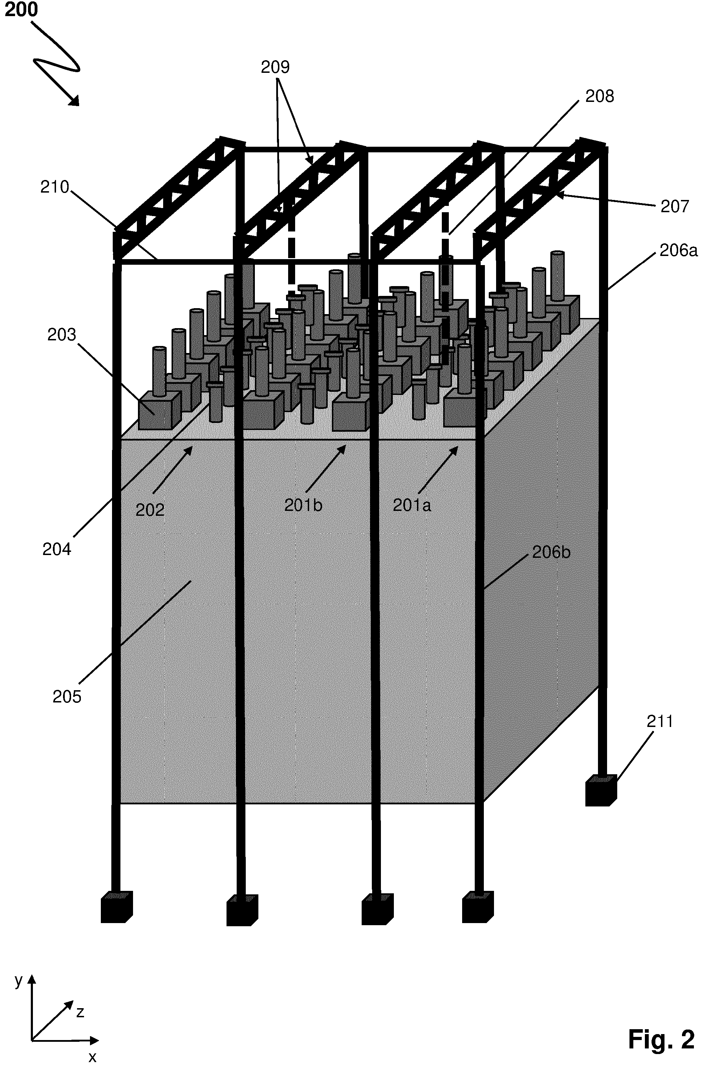

Figur 2 zeigt eine schematische und vereinfachte perspektivische Darstellung eines Reformerofens 200 mit einer erfindungsgemäßen Stahlkonstruktion. Gezeigt ist im Wesentlichen der Strahlungsraum des Reformerofens 200, welcher die eigentliche Stahlkonstruktion, eine feuerfeste Auskleidung sowie mehrere Reformerrohrreihen und Brennerreihen aufweist. Die Stahlkonstruktion dient der Befestigung der Brenner, Reformerrohre, sowie Zu- und Ableitungen zu/von den Brennern/Reformerrohren. Einzelheiten im Hinblick auf die Befestigungsmittel sind aus Gründen der Übersichtlichkeit nicht gezeigt.

Der gezeigte Reformerofen 200 weist analog zum Reformerofen der Figur 1 vier Brennerreihen 201a, 201b sowie drei Reformerrohrreihen 202 auf. Jede der Brennerreihen 201a, 201b weist sechs in Reihe angeordnete Brenner 203 auf. Jede der Reformerrohrreihen 202 weist acht in Reihe angeordnete Reformerrohre 204 auf. Bei den am jeweils linken und rechten Rand der Abbildung angeordneten Brennerreihen handelt es sich um die wandständigen Brennerreihen 201a, welche lediglich eine benachbart und parallel angeordnete Reformerrohrreihe 202 befeuern. Die zwischen den wandständigen Brennerreihen 201a angeordneten Brennerreihen sind die nicht wandständigen Brennerreihen 201b, welche jeweils zwei benachbart und parallel angeordnete Reformerrohrreihen 202 befeuern. Die Reformerrohrreihen 202 sowie die Brennerreihen 201a, 201b erstrecken sich jeweils in z-Richtung der Darstellung. Die Brenner 103 erzeugen jeweils nach unten gerichtete Flammen, das heißt die Flamme erstreckt sich im Wesentlichen in y-Richtung der Zeichnung und heizt dadurch die sich ebenfalls in y-Richtung erstreckenden, vertikal angeordneten Reformerrohre 204. Die Brenner 203 ragen in den Befeuerungsraum des Strahlungsraums des Reformerofens 200 hinein, welcher durch die feuerfeste Auskleidung 205 als Abgrenzung nach außen hin definiert wird. Die vertikal verlaufenden Reformerrohre 203 durchstoßen dabei die Decke und den Boden der feuerfesten Auskleidung 205 in einer Weise, dass die Hauptlänge eines Reformerrohres 204 durch die benachbart angeordneten Brenner beheizbar ist. Die Zuleitungen zur Versorgung der Brenner mit Brenngas und Oxidationsmittel sowie der Reformerrohre mit Eduktgas sind aus Gründen der Übersichtlichkeit nicht gezeigt. Gleiches gilt für die Rausgaskanäle und Ableitungen zum Abzug der Brennerabgase sowie der Ableitungen zum Abführen der Produktgase.

Die Stahlkonstruktion des gezeigten Reformerofens weist insgesamt vier Hauptträgereinheiten auf. Jede der vier Hauptträgereinheiten weist zwei vertikale Stützen 206a und 206b sowie einen horizontalen Hauptträger 207 auf. Die Stützen 206a, 206b weisen jeweils einen Sockel 211 auf. Der horizontal verlaufende Hauptträger 207 verbindet die beiden vertikal verlaufenden Stützen durch eine kraftschlüssige oder stoffschlüssige Verbindung, zum Beispiel durch eine geschraubte Verbindung oder eine Schweißverbindung. Dabei sind zwei der Hauptträgereinheiten wandständig an den Seitenflächen (jeweils durch yz-Ebene definiert) des Reformerofens angeordnet, und zwei der Hauptträgereinheiten sind zwischen vorgenannten Hauptträgereinheiten angeordnet. Dabei sind alle vertikalen Stützen 206a, 206b der Hauptträgereinheiten wandständig angeordnet. Die Stützen 206a, 206b der beiden zwischen den an den Seitenflächen angeordneten Hauptträgereinheiten angeordneten Hauptträgereinheiten verlaufen entlang der Flächen der Stirnseiten (definiert durch xy-Ebene) des Reformerofens 200. Die Stützen 206a, 206b der wandständig an den Seitenflächen angeordneten Hauptträgereinheiten verlaufen im Bereich der Grenze zwischen den Wänden der Stirnseiten (xy-Ebene) und den Wänden der Seitenflächen (yz-Ebene) des Reformerofens 200. Die Wände des Reformerofens umschließen den Strahlungsraum mitsamt der Stahlkonstruktion, der feuerfesten Auskleidung 205 sowie den Brennern 203 und Reformerrohre 204. Die Wände des Reformerofens 200 sind aus Gründen der Übersichtlichkeit nicht gezeigt.

Zwischen den Stützen 206a, 206b der Hauptträgereinheiten sind zusätzliche mit den Hauptträgern verbundene, vertikal verlaufende Hilfsstützen 208 angeordnet. Die Hilfsstützen 208 dienen der zusätzlichen Stabilisierung der Stahlkonstruktion. Die Hilfsstützen 208 durchstoßen die Decke der feuerfesten Auskleidung 205 und sind dadurch teilweise innerhalb des Befeuerungsraums des Reformerofens 200 angeordnet. Je nicht wandständigem Hauptträger 207 ist im Beispiel des Reformerofens 200 eine Hilfsstütze 208 vorgesehen. Die Anzahl der Hilfsstützen 208 hängt dabei grundsätzlich von der Länge des Reformerofens, das heißt von der Anzahl der Reformerrohre 204 und Brenner 203 je Reformerrohr- bzw. Brennerreihe ab. Oberhalb der Hauptträger 207 weist die Stahlkonstruktion zur zusätzlichen statischen Stabilisierung eine kraftschlüssig mit dem Hauptträger 207 verbundene Fachwerkkonstruktion 209 auf, welche diagonal und vertikal angeordnete und untereinander verbundene Streben aufweist. Die Stützen der Hauptträgereinheiten sind untereinander durch horizontal verlaufende Querträger 210 verbunden. Die Querträger dienen der Stabilisierung des Reformerofens, tragen jedoch nicht die Hauptlast der Brenner 203 und Reformerrohre 204 sowie ferner vorhandener Zu- und Ableitungen.

Die horizontal verlaufenden Hauptträger 207 der Hauptträgereinheiten sind erfindungsgemäß parallel zu den Brennerreihen 201a, 201b und den Reformerrohrreihen 202 angeordnet. Mit anderen Worten, die Hauptträger 207 verlaufen in z-Richtung der Darstellung, was auch auf die Brennerreihen 201a, 201b und Reformerrohrreihen 202 zutrifft, welche sich ebenfalls in z-Richtung erstrecken. Durch die erfindungsgemäße Anordnung der Hauptträgereinheiten, insbesondere aufgrund der parallel zu den Brenner- und Reformerrohrreihen angeordneten Hauptträger 207 können die Brenner 203 und Reformerrohre 204 je Reihe gleichmäßig beabstandet angeordnet werden. Dabei steigt die Zahl der erforderlichen Hauptträgereinheiten mit der Zahl der Reformerrohrreihen und Brennerreihen. Im vorliegenden Fall ist je Brennerreihe eine Hauptträgereinheit erforderlich und eine Hauptträgereinheit mehr als Reformerrohrreihen vorhanden sind. Die Zahl der Reformerrohre und Brenner je Reihe ist dabei nach oben hin im Prinzip nicht begrenzt, da zwischen den Stützen 206a und 207a beliebig viele Hilfsstützen 208 angeordnet werden können, welche zwischen den Reformerrohrreihen 202 und Brennerreihen 201a, 201b verlaufen und die Reihensymmetrie dadurch nicht stören. Die erfindungsgemäße Stahlkonstruktion ermöglicht den Bau eines Reformerofens, welcher aufgrund der gleichmäßigen Beabstandung der Reformerrohre keine "Buchten" erfordert.

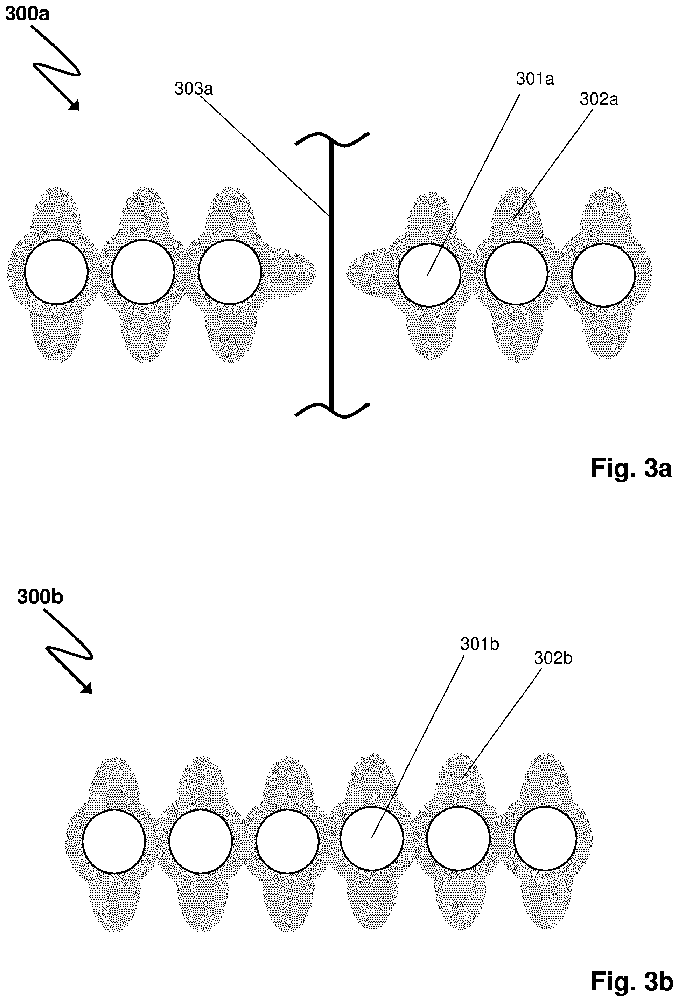

Durch die gleichmäßige Beabstandung der Reformerrohre 202 je Reformerrohrreihe kann die Maximaltemperatur je Rohr verringert werden, was durch die Darstellung der Figuren 3a und 3b schematisch erläutert wird.

Figur 3a zeigt einen Ausschnitt aus einer Reformerrohrreihe des Reformerofens 100 mit sechs Reformerrohren 301a sowie zugehörigem Wärmeprofil 302a. Dabei verläuft der Hauptträger 303a einer Hauptträgereinheit orthogonal zur Reformerrohrreihe und erfordert dadurch, wie vorstehend erläutert, einen größeren Abstand zwischen denjenigen Reformerrohren 301a, welche im Bereich des Hauptträgers 303a verlaufen. Dadurch ergibt sich in diesem Bereich ein im Vergleich zum übrigen Bereich der Reformerrohrreihe ungünstiges Wärmeprofil. Dieses wird insbesondere durch den größeren Sichtfaktor der im Bereich des Hauptträgers 303a angeordneten Reformerrohre zu den benachbarten Brennerflammen verursacht.

Figur 3b zeigt den analogen Fall für einen erfindungsgemäßen Reformerofen 200 mit Reformerrohren 301b sowie zugehörigem Wärmeprofil 302b. Durch die gleichmäßige Beabstandung der Reformerrohre 301b wird auch das Wärmeprofil 302b vergleichmäßigt, wodurch die maximale Betriebstemperatur eines Reformerrohres 301b gesenkt werden kann. Der erfindungsgemäße Reformerofen 200 weist in vorteilhafter Weise keinerlei "Buchten" auf.

### Bezugszeichenliste

- 100: Reformerofen (Stand der Technik)
- 200: Reformerofen (Erfindung)
- 101a, 201a: Brennerreihe (wandständig)
- 101b, 201b: Brennerreihe (nicht wandständig)
- 102, 202: Reformerrohrreihe
- 103, 203: Brenner
- 104, 204: Reformerrohr
- 105, 205: Feuerfeste Auskleidung
- 106a, 106b, 206a, 206b: Stütze
- 107, 207: Hauptträger
- 108, 208: Hilfsstütze
- 109, 209: Fachwerkkonstruktion
- 210: Querträger
- 111, 211: Sockel
- 301a, 301b: Reformerrohr
- 302a, 302b: Wärmeprofil
- 303a: Hauptträger

## Patentansprüche

1. Ein Reformerofen (200) zur katalytischen Reformierung eines kohlenstoffhaltigen Einsatzstoffes mit Wasserdampf, aufweisend
einen durch eine Mehrzahl von Wänden definierten, zur äußeren Umgebung abgegrenzten Strahlungsraum, wobei
der Strahlungsraum eine als Gerüst ausgeführte Stahlkonstruktion zur Befestigung von zu- und abführenden Rohrleitungen, Brennern (203) und vertikal angeordneten Reformerrohren (204) beinhaltet, wobei
die Brenner (203) zum Erzeugen von abwärts oder aufwärts gerichteten Flammen zum Beheizen der Reformerrohre (204) angeordnet sind, und wobei die Brenner (203) und Reformerrohre (204) innerhalb des Strahlungsraums in Reihen als Brennerreihen (201a, 201b) und Reformerrohrreihen (202) angeordnet sind, wobei die Brennerreihen (201a, 201b) und Reformerrohrreihen (202) alternierend und parallel zueinander angeordnet sind, und
die Stahlkonstruktion eine Mehrzahl von Hauptträgereinheiten aufweist, wobei jede Hauptträgereinheit zwei wandständig angeordnete, vertikal verlaufende Stützen (206a, 206b), sowie einen über die Stützen verbundenen und horizontal verlaufenden Hauptträger (207) aufweist, welcher sich über die gesamte Länge des Strahlungsraums erstreckt, und wobei
die Hauptträger (207) zur Befestigung der zu- und abführenden Rohrleitungen, Brenner (203) und Reformerrohre (204) konfiguriert sind, und
die Stahlkonstruktion eine Mehrzahl von horizontal verlaufenden Querträgern (210) aufweist, welche die Stützen der Hauptträgereinheiten untereinander verbinden,
**dadurch gekennzeichnet, dass**
die Hauptträger (207) der Hauptträgereinheiten zu den Reformerrohrreihen (202) und Brennerreihen (201a, 201b) parallel verlaufend angeordnet sind und die Querträger (210) zu den Reformerrohreihen (202) und Brennerreihen (201a, 201b) zumindest teilweise orthogonal verlaufend angeordnet sind.

2. Reformerofen nach Anspruch 1, **dadurch gekennzeichnet, dass** die Anzahl der Hauptträgereinheiten eine Funktion der Anzahl der Reformerrohrreihen (202) und/oder eine Funktion der Anzahl der Brennerreihen (201a, 201b) ist.

3. Reformerofen nach Anspruch 1 oder 2, **dadurch gekennzeichnet, dass** der Strahlungsraum eine Anzahl h Hauptträgereinheiten aufweist, und eine Anzahl r Reformerrohrreihen (202) aufweist, wobei zwischen h und r die Beziehung h = r + 1 gilt.

4. Reformerofen nach einem der vorhergehenden Ansprüche, **dadurch gekennzeichnet, dass** der Strahlungsraum eine Anzahl h Hauptträgereinheiten aufweist, und eine Anzahl b Brennerreihen (201a, 201b) aufweist, wobei zwischen h und b die Beziehung h = b gilt.

5. Reformerofen nach einem der vorhergehenden Ansprüche, **dadurch gekennzeichnet, dass** die Anzahl der Hauptträgereinheiten keine Funktion der Länge einer Reformerrohreihe (202) ist und/oder die Anzahl der Hauptträgereinheiten keine Funktion der Länge einer Brennerreihe (201a, 201b) ist.

6. Reformerofen nach einem der vorhergehenden Ansprüche, **dadurch gekennzeichnet, dass** zwischen zwei benachbarten Hauptträgereinheiten
- eine einzelne Brennerreihe (201a, 201b) angeordnet ist oder
- eine Brennerreihe (201a, 201b) und eine der Brennerreihe benachbarte Reformerrohrreihe (202) angeordnet ist.

7. Reformerofen nach Anspruch 6, **dadurch gekennzeichnet, dass** die eine einzelne Brennerreihe eine wandständige Brennerreihe (201a) ist.

8. Reformerofen nach einem der vorhergehenden Ansprüche, **dadurch gekennzeichnet, dass** zwei der Mehrzahl von Hauptträgereinheiten an zwei gegenüberliegenden Wänden des Strahlungsraums jeweils wandständig angeordnet sind, wobei die Hauptträger der wandständig positionierten Hauptträgereinheiten parallel zur jeweiligen Wand verlaufen.

9. Reformerofen nach Anspruch 8, **dadurch gekennzeichnet, dass** die wandständig angeordneten Hauptträgereinheiten über mehr als zwei wandständig angeordnete, vertikal verlaufende Stützen (206a, 206b) verfügen.

10. Reformerofen nach einem der vorhergehenden Ansprüche, **dadurch gekennzeichnet, dass** alle Abstände zwischen zwei benachbarten Reformerrohren (204) innerhalb einer Reformerrohrreihe (202) und/oder alle Abstände zwischen zwei benachbarten Brennern (203) innerhalb einer Brennerreihe (201a, 201b) innerhalb des gesamten Strahlungsraums des Reformerofens gleich sind.

11. Reformerofen nach einem der vorhergehenden Ansprüche, **dadurch gekennzeichnet, dass** alle Abstände zwischen zwei benachbarten Reformerrohren (204), gemessen durch die zwischen zwei Reformerrohrachsen benachbarter Reformerrohre (204) verlaufende Waagrechte, kleiner oder gleich 500 mm sind, vorzugsweise in einem Bereich von 250 bis 450 mm liegen, weiter bevorzugt in einem Bereich von 280 bis 320 mm liegen.

12. Reformerofen nach einem der vorhergehenden Ansprüche, **dadurch gekennzeichnet, dass** die Temperatur des über die abführenden Rohrleitungen abgezogenen Produktgases im Mittel bis zu 950 °C beträgt, vorzugsweise in einem Bereich von 900 bis 950 °C liegt, weiter bevorzugt in einem Bereich von 925 bis 950 °C liegt.

13. Reformerofen nach einem der vorhergehenden Ansprüche, **dadurch gekennzeichnet, dass** die Stahlkonstruktion als Gerüst für eine feuerfeste Auskleidung des Strahlungsraums dient, wobei der Raum innerhalb der feuerfesten Auskleidung einen Befeuerungsraum zur Befeuerung der Reformerrohre (204) definiert.

14. Reformerofen nach einem der vorhergehenden Ansprüche, **dadurch gekennzeichnet, dass** jede Hauptträgereinheit eine oberhalb der Hauptträgereinheit angeordnete und mit dem Hauptträger kraftschlüssig verbundene Fachwerkkonstruktion (209) aufweist.

15. Verwendung eines Reformerofens (200) nach einem der vorhergehenden Ansprüche zur Dampfreformierung eines kohlenstoffhaltigen Einsatzstoffes, insbesondere von Erdgas.

## Claims

1. Reformer furnace (200) for catalytic reforming of a carbon-containing input material with steam, having
a radiation space defined by a plurality of walls and delimited from the external surroundings, wherein
the radiation space comprises a steel construction configured as a framework for the fastening of supply and discharge pipelines, burners (203) and vertically arranged reformer tubes (204), wherein
the burners (203) are arranged to produce downwardly or upwardly directed flames for heating the reformer tubes (204), and wherein the burners (203) and reformer tubes (204) are arranged within the radiation space in rows as burner rows (201a, 201b) and reformer rows (202), wherein the burner rows (201a, 201b) and reformer rows (202) are arranged in an alternating and parallel manner with respect to one another, and
the steel construction has a plurality of main carrier units, wherein each main carrier unit has two wall-adjacently arranged, vertically extending supports (206a, 206b) and a horizontally extending main carrier (207) which is connected via the supports and which extends over the entire length of the radiation space, and wherein
the main carriers (207) are configured for fastening the supply and discharge pipelines, burners (203) and reformer tubes (204), and
the steel construction has a plurality of horizontally extending crossmembers (210) which connect the supports of the main carrier units among one another,
**characterized in that**
the main carriers (207) of the main carrier units are arranged so as to run parallel to the reformer tube rows (202) and burner rows (201a, 201b), and the crossmembers (210) are arranged so as to run at least partially orthogonally with respect to the reformer tube rows (202) and burner rows (201a, 201b).

2. Reformer furnace according to Claim 1, **characterized in that** the number of the main carrier units is a function of the number of the reformer tube rows (202) and/or a function of the number of the burner rows (201a, 201b).

3. Reformer furnace according to Claim 1 or 2, **characterized in that** the radiation space has a number h of main carrier units, and has a number r of reformer tube rows (202), wherein the relationship between h and r is h = r +1.

4. Reformer furnace according to one of the preceding claims, **characterized in that** the radiation space has a number h of main carrier units, and has a number b of burner rows (201a, 201b), wherein the relationship between h and b is h = b.

5. Reformer furnace according to one of the preceding claims, **characterized in that** the number of the main carrier units is not a function of the length of a reformer tube row (202) and/or the number of the main carrier units is not a function of the length of a burner row (201a, 201b).

6. Reformer furnace according to one of the preceding claims, **characterized in that** between two adjacent main carrier units
- a single burner row (201a, 201b) is arranged, or
- one burner row (201a, 201b) and one reformer tube row (202) adjacent to the burner row are arranged.

7. Reformer furnace according to Claim 6, **characterized in that** the one single burner row is a wall-adjacent burner row (201a).

8. Reformer furnace according to one of the preceding claims, **characterized in that** two of the plurality of main carrier units are arranged on two opposite walls of the radiation space, in each case wall-adjacently, wherein the main carriers of the wall-adjacently positioned main carrier units extend parallel to the respective wall.

9. Reformer furnace according to Claim 8, **characterized in that** the wall-adjacently arranged main carrier units have more than two wall-adjacently arranged, vertically extending supports (206a, 206b).

10. Reformer furnace according to one of the preceding claims, **characterized in that** all the spacings between two adjacent reformer tubes (204) within a reformer tube row (202) and/or all the spacings between two adjacent burners (203) within a burner row (201a, 201b) are identical within the entire radiation space of the reformer furnace.

11. Reformer furnace according to one of the preceding claims, **characterized in that** all the spacings between two adjacent reformer tubes (204), measured by the horizontal extending between two reformer tube axes of adjacent reformer tubes (204), are less than or equal to 500 mm, preferably lying in a range from 250 to 450 mm, more preferably lying in a range from 280 to 320 mm.

12. Reformer furnace according to one of the preceding claims, **characterized in that** the temperature of the product gas withdrawn via the discharge pipelines is on average up to 950° C, preferably lying in a range from 900 to 950° C, more preferably lying in a range from 925 to 950° C.

13. Reformer furnace according to one of the preceding claims, **characterized in that** the steel construction serves as a framework for a refractory lining of the radiation space, wherein the space within the refractory lining defines a firing space for firing the reformer tubes (204).

14. Reformer furnace according to one of the preceding claims, **characterized in that** each main carrier unit has a truss construction (209) arranged above the main carrier unit and connected to the main carrier in a force-fitting manner.

15. Use of a reformer furnace (200) according to one of the preceding claims for steam reforming of a carbon-containing input material, in particular natural gas.

## Revendications

1. Four de reformage (200) pour le reformage catalytique d'une charge d'alimentation carbonée avec de la vapeur d'eau, présentant
un espace de rayonnement défini par une pluralité de parois, délimité par rapport à l'environnement extérieur, l'espace de rayonnement comprenant une construction en acier réalisée sous forme d'ossature pour la fixation de conduites tubulaires d'amenée et d'évacuation, de brûleurs (203) et de tubes de reformage (204) agencés verticalement,
les brûleurs (203) étant agencés pour générer des flammes dirigées vers le bas ou vers le haut pour chauffer les tubes de reformage (204), et les brûleurs (203) et les tubes de reformage (204) étant agencés à l'intérieur de l'espace de rayonnement en rangées sous forme de rangées de brûleurs (201a, 201b) et de rangées de tubes de reformage (202), les rangées de brûleurs (201a, 201b) et les rangées de tubes de reformage (202) étant agencées en alternance et parallèlement les unes aux autres, et
la structure en acier présentant une pluralité d'unités de support principales, chaque unité de support principale présentant deux soutiens (206a, 206b) s'étendant verticalement, agencés au niveau de la paroi, ainsi qu'un support principal (207) s'étendant horizontalement et relié par l'intermédiaire des soutiens, qui s'étend sur toute la longueur de l'espace de rayonnement, et
les supports principaux (207) étant configurés pour fixer les conduites tubulaires d'amenée et d'évacuation, les brûleurs (203) et les tubes de reformage (204), et
la construction en acier présentant une pluralité de supports transversaux (210) s'étendant horizontalement, qui relient entre eux les soutiens des unités de support principales,
**caractérisé en ce que**
les supports principaux (207) des unités de support principales sont agencés parallèlement aux rangées de tubes de reformeur (202) et aux rangées de brûleurs (201a, 201b) et les supports transversaux (210) sont agencés au moins partiellement orthogonalement aux rangées de tubes de reformeur (202) et aux rangées de brûleurs (201a, 201b).

2. Four de reformage selon la revendication 1, **caractérisé en ce que** le nombre d'unités de support principales est une fonction du nombre de rangées de tubes de reformage (202) et/ou une fonction du nombre de rangées de brûleurs (201a, 201b).

3. Four de reformage selon la revendication 1 ou 2, **caractérisé en ce que** l'espace de rayonnement présente un nombre h d'unités de support principales, et un nombre r de rangées de tubes de reformage (202), la relation h = r + 1 s'appliquant entre h et r.

4. Four de reformage selon l'une quelconque des revendications précédentes, **caractérisé en ce que** l'espace de rayonnement présente un nombre h d'unités de support principales, et un nombre b de rangées de brûleurs (201a, 201b), la relation h = b s'appliquant entre h et b.

5. Four de reformage selon l'une quelconque des revendications précédentes, **caractérisé en ce que** le nombre d'unités de support principales n'est pas fonction de la longueur d'une rangée de tubes de reformage (202) et/ou le nombre d'unités de support principales n'est pas fonction de la longueur d'une rangée de brûleurs (201a, 201b) .

6. Four de reformage selon l'une quelconque des revendications précédentes, **caractérisé en ce qu'**entre deux unités de support principales voisines
- une seule rangée de brûleurs (201a, 201b) est agencée ou
- une rangée de brûleurs (201a, 201b) et une rangée de tubes de reformage (202) voisine de la rangée de brûleurs sont agencées.

7. Four de reformage selon la revendication 6, **caractérisé en ce que** la rangée de brûleurs unique est une rangée de brûleurs au niveau de la paroi (201a).

8. Four de reformage selon l'une quelconque des revendications précédentes, **caractérisé en ce que** deux de la pluralité d'unités de support principales sont agencées sur deux parois opposées de l'espace de rayonnement, respectivement au niveau de la paroi, les supports principaux des unités de support principales positionnées au niveau de la paroi s'étendant parallèlement à la paroi respective.

9. Four de reformage selon la revendication 8, **caractérisé en ce que** les unités de support principales agencées au niveau de la paroi disposent de plus de deux soutiens (206a, 206b) agencés au niveau de la paroi, s'étendant verticalement.

10. Four de reformage selon l'une quelconque des revendications précédentes, **caractérisé en ce que** toutes les distances entre deux tubes de reformage (204) voisins à l'intérieur d'une rangée de tubes de reformage (202) et/ou toutes les distances entre deux brûleurs (203) voisins à l'intérieur d'une rangée de brûleurs (201a, 201b) sont égales à l'intérieur de l'ensemble de l'espace de rayonnement du four de reformage.

11. Four de reformage selon l'une quelconque des revendications précédentes, **caractérisé en ce que** toutes les distances entre deux tubes de reformage (204) voisins, mesurées par l'horizontale s'étendant entre deux axes de tubes de reformage de tubes de reformage (204) voisins, sont inférieures ou égales à 500 mm, de préférence se situent dans une plage de 250 à 450 mm, de manière davantage préférée se situent dans une plage de 280 à 320 mm.

12. Four de reformage selon l'une quelconque des revendications précédentes, **caractérisé en ce que** la température du gaz produit évacué par les conduites tubulaires d'évacuation est en moyenne jusqu'à 950 °C, de préférence dans une plage de 900 à 950 °C, de manière davantage préférée dans une plage de 925 à 950 °C.

13. Four de reformage selon l'une quelconque des revendications précédentes, **caractérisé en ce que** la structure en acier sert d'ossature pour un revêtement réfractaire de l'espace de rayonnement, l'espace à l'intérieur du revêtement réfractaire définissant un espace d'allumage pour l'allumage des tubes de reformage (204) .

14. Four de reformage selon l'une quelconque des revendications précédentes, **caractérisé en ce que** chaque unité de support principale présente une construction en treillis (209) agencée au-dessus de l'unité de support principale et reliée par adhérence au support principal.

15. Utilisation d'un four de reformage (200) selon l'une quelconque des revendications précédentes pour le reformage à la vapeur d'une charge d'alimentation carbonée, notamment de gaz naturel.
